# EUROPÄISCHE PATENTSCHRIFT

(11) **EP 0 378 734 B1**
(45) Veröffentlichungstag und Bekanntmachung des Hinweises auf die Patenterteilung: **17.03.1993**
(21) Anmeldenummer: 89101023.3
(22) Anmeldetag: 20.01.1989
(51) Int. Cl.: F21V 25/12, H02G 3/08

(54) **Elektrische Schauglas-Leuchte**
Inspection glass light
Lampe pour regard

(43) Veröffentlichungstag der Anmeldung: 25.07.1990
(73) Patentinhaber: Papenmeier, Friedrich Horst, D-58239 Schwerte (DE)
(72) Erfinder: Papenmeier, Friedrich Horst, D-58239 Schwerte (DE)
(74) Vertreter: Schwabe - Sandmair - Marx

(56) Entgegenhaltungen:
- DE-B- 1 269 726
- DE-C- 531 526
- DE-U- 8 514 016
- US-A- 2 574 882

## Beschreibung

Die vorliegende Erfindung bezieht sich auf eine elektrische Schauglas-Leuchte der im Oberbegriff des Anspruchs 1 angegebenen Gattung.

Elektrische Schauglas-Leuchten zur Montage auf Schauglas-Flanschfassungen an Behältern, Kesseln, Rohrleitungen und dergleichen, insbesondere für explosionsgefährdete Räume, sind in vielen Ausführungsformen bekannt. So geht aus der CH-A-542 401 eine Niederspannungsleuchte mit einem Gehäuse hervor, das durch eine Trennwand in zwei von außen zugängliche Räume unterteilt ist; im ersten Raum befinden sich Klemmittel für den Anschluß einer Zuleitung, während in dem anderen Raum ein Transformator und die eigentliche Lichtquelle angeordnet sind. Eine Wand des Gehäuses ist mit einer Öffunung zur Aufnahme einer die Zuleitung dicht verschließenden Einführungsvorrichtung versehen, und der Raum selbst ist mit einem Abschlußdeckel nach außen dicht verschlossen.

Die DE-B-871 925 zeigt eine explosionssichere Schauglasleuchte, die direkt auf einem zur Befestigung eines Schauglases dienenden Flanschring sitzt, wobei der Lichtstrom der Leuchte durch das Schauglas in das Kesselinnere geworfen wird.

Aus dem DE-U-85 14 016 geht eine elektrische Leuchte gemäß dem Oberbegriff des Anspruchs 1 hervor, die als Ex-d-Kabelschwanzleuchte ausgebildet ist und eine mehradrige, druckfeste Ex-d-Leitungseinführung aufweist; die Glasscheiben-Ringfassung ist an der Lichtaustrittsseite mit einem Innengewinde für die Verschraubung mit dem Leuchtengehäuse versehen.

Aus der DE-B-1 269 726 ist eine explosionsgeschützte Leuchte mit einem Schalter bekannt, der beim Öffnen der Leuchte für Montagezwecke die Spannung an der zur Lampe gehörigen Lampenfassung abschalten soll. Bei der bekannten Leuchte ist der Schalter in einem separat hergestellten Anschluß-Kasten vorgesehen, in den wiederum elektrische Leitungen einmünden. Über die Art der Zuführung in den Anschluß-Kasten ist in dieser Druckschrift allerdings nichts ausgesagt. Die elektrischen Zuleitungen von dem Anschluß-Kasten in das Leuchtengehäuse sind über Leitungsdurchführungen handelsüblicher Bauart ausgeführt, die eingeschraubt und verkittet sind. Demzufolge ist bei dieser bekannten Leuchte die Problemzone lediglich vom Übergang zwischen dem Anschlußkasten und dem Lampengehäuse zu dem Übergang zwischen der Zuleitung und dem Anschlußgehäuse verlegt worden. Der Anschlußkasten ist gegen das Lampengehäuse zusätzlich durch Dichtungen abgedichtet, da verständlicherweise die elektrische Verbindung zwischen dem Anschluß-Kasten und dem Lampengehäuse auch aufgrund der Abdichtung über eine Kittmasse äußerst anfällig ist. Außerdem ist der Anschlußkasten durch zusätzliche Haltemittel an dem Lampengehäuse gesichert bzw. gehalten.

Aus der US-A-2 574 882 ist eine komplizierte explosionsgeschützte Beleuchtungseinrichtung bekannt. Diese besteht aus einer Vielzahl von ineinander verschraubten Segmenten, die gleichwohl jedes für sich eine mögliche Schwachstelle bilden. Zur Erhöhung der Sicherheit sind hier an verschiedenen Stellen Klemmschrauben vorgesehen, wodurch allerdings die Herstellung der bekannten Leuchte verkompliziert wird. Die gleichfalls gattungsfremde bekannte Leuchte enthält mehrere hintereinander angeordnete, aber gegeneinander abgedichtete Kammern, die letztendlich den Explosionsschutz bewirken sollen.

Bei solchen elektrischen Schauglas-Leuchten, wie sie auch in verschiedenen Ausführungsformen im Handel erhältlich sind, besteht in der Regel das Leuchten-Gehäuse aus Metallguß. Die Strom-Zuführung erfolgt direkt in das Leuchten-Gehäuse durch spezielle Kabel-Einführungen. Dabei ist in einigen Fällen das Leuchten-Gehäuse mit einem angegossenen Anschluß-Kasten versehen, von dem aus Leitungs-Durchführungen in das Innere des Leuchten-Gehäuses führen. Hierbei erfolgt die Stromzufuhr über spezielle Kabel-Einführungen in den Anschluß-Kasten.

Der Nachteil bei diesen elektrischen Schauglas-Leuchten liegt darin, daß für die beiden unterschiedlichen Anschlußarten, nämlich Zuleitung direkt in das Leitungs-Gehäuse durch spezielle Kabel-Einführungen oder über einen Anschluß-Kasten, jeweils eigene Leuchten-Gehäuse benötigt werden. Dadurch entsteht jedoch ein großer zusätzlicher Aufwand, da dies zwei verschiedene Gießeinrichtungen und die Lagerhaltung der entsprechenden, doppelten Menge an Leuchten-Gehäusen erfordert. Dabei muß man auch berücksichtigen, daß es diese Leuchten-Gehäuse auch in unterschiedlichen Größen gibt. Außerdem läßt das Aussehen dieser bekannten Schauglas-Leuchten, insbesondere wegen des zusätzlichen, angegossenen Anschluß-Kastens, zu wünschen übrig.

Der Erfindung liegt die Aufgabe zugrunde, eine elektrische Schauglas-Leuchte der angegebenen Gattung zu schaffen, bei der die oben erwähnten Nachteile nicht auftreten. Insbesondere soll eine Schauglas-Leuchte vorgeschlagen werden, die einerseits formschön und andererseits fertigungstechnisch einfacher zu handhaben ist.

Dies wird erfindungsgemäß durch die im kennzeichnenden Teil des Anspruchs 1 angegebenen Merkmale erreicht.

Zweckmäßige Ausführungsformen werden durch die Merkmale der Unteransprüche definiert.

Die erzielten Vorteile beruhen darauf, daß für beide unterschiedlichen Anschlußtypen, nämlich Zuleitung direkt in das Leuchtengehäuse über spezielle Kabel-Einführungen oder erfindungsgemäß mittels eines Anschluß-Kastens, das gleiche Leuchtengehäuse eingesetzt werden kann, wodurch sich sowohl beim Gießen dieser Leuchten-Gehäuse als auch bei ihrer Lagerhaltung erhebliche Kosteneinsparungen ergeben.

Ein weiterer Vorteil liegt darin, daß der Anschluß-Kasten nicht mehr angegossen werden muß, also das Leuchten-Gehäuse eine nahezu rotationssymmetrische Form hat, so daß für die spanabhebende Bearbeitung des Leuchten-Gehäuses nur noch einfachere, preiswertere Aufnahme-Vorrichtungen benötigt werden.

Der als Leuchten-Gehäuse dienende, nahezu rotationssymmetrische Körper laßt sich auch designtechnisch sehr formschön gestalten, so daß sich eine ästhetisch ansprechende Form ergibt.

Die Erfindung wird im folgenden anhand eines Ausführungsbeispiels unter Bezugnahme auf die beiliegenden, schematischen Zeichnungen näher erläutert. Es zeigen
- Fig. 1: einen Schnitt durch eine Ausführungsform einer Schauglas-Leuchte mit angesetztem Anschluß-Kasten,
- Fig. 2: einen Schnitt durch den oberen Teil der Schauglas-Leuchte nach Figur 1, und
- Fig. 3: eine Draufsicht auf die Schauglas-Leuchte nach Figur 1.

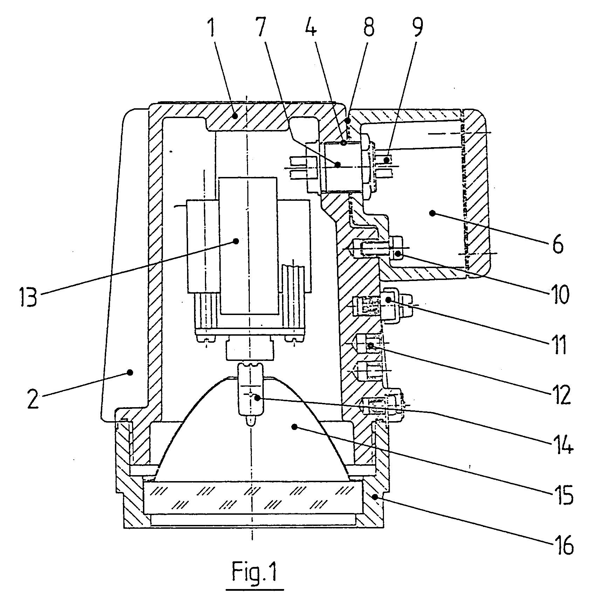

Die insbesondere aus Figur 1 ersichtliche Schauglas-Leuchte wird auf Schauglas-Flanschfassungen an Behältern, Kesseln, Rohrleitungen und dergleichen montiert und dient insbesondere für den Einsatz in explosionsgefährdeten Räumen, so daß sie auch als "Ex-Schauglas-Leuchte" bezeichnet wird.

Eine solche Schauglas-Leuchte weist ein topfförmiges, fast rotationssymmetrisches, durch Metallguß hergestelltes Gehäuse 1 mit Kühlrippen 2 auf, die über den Außenumfang des Gehäuses 1 gleichmäßig verteilt sind (siehe Figur 3).

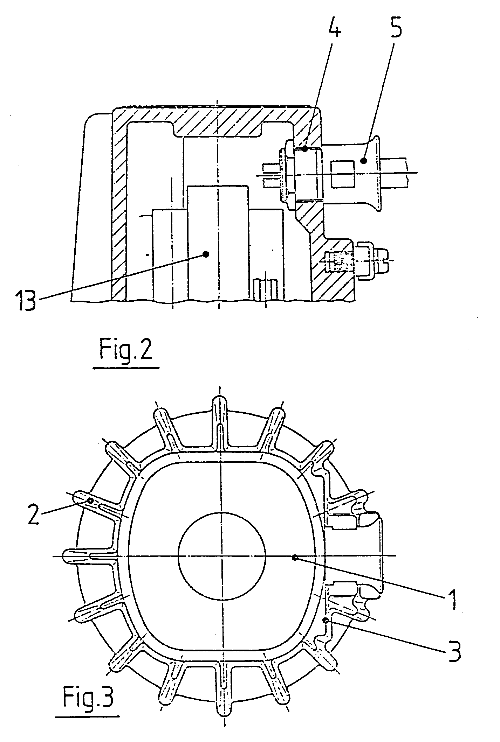

An der gemäß den Darstellungen in Figur 1 bis 3 rechten Seite ist das Gehäuse 1 mit einer planen Fläche 3 (siehe Figur 3) versehen, d. h. in diesem Bereich befinden sich keine Kühlrippen 2, so daß die rotationssymmetrische Grundform des Gehäuses 1 in diesem Bereich abgeflacht ist. In dieser Fläche 3 ist das Gehäuse 1 mit einer durchgehenden Gewindebohrung 4 (siehe Figur 1 und 2) versehen.

Abgesehen von der Fläche 3 mit der Gewindebohrung 4 hat diese Schauglas-Leuchte den üblichen Aufbau, also beispielsweise eine Erdungsschraube 11 für den Anschluß eines Erdungs-Leiters. Zwei Gewinde-Einsätze 12 unter der Fläche 3 dienen zur Montage dieser Schauglas-Leuchte, beispielsweise an einem Montagewinkel (nicht dargestellt).

Im Innern des topfförmigen, fast rechteckigen, insbesondere quadratischen Gehäuses 1 sind ein Transformator 13, eine Lichtquelle 14 sowie ein Reflektor 15 untergebracht.

Die gemäß der Darstellung in Figur 1 nach unten gerichtete Lichtaustrittseite ist mit einer Glasscheibe versehen, die durch eine Glasscheiben-Ringfassung 16 hermetisch mit dem Gehäuse 1 verschraubt ist.

Das aus den Figuren 1 bis 3 ersichtliche Gehäuse kann mit zwei verschiedenen Anschlußarten betrieben werden, nämlich mit der Anschlußart "Zuleitung direkt in die Schauglas-Leuchte" einerseits und der Anschlußart "Zuleitung über einen Anschluß-Kasten" andererseits.

Für die Anschlußart "Zuleitung direkt in die Schauglas-Leuchte" befindet sich in der Gewindebohrung 4 in der Fläche 3 eine Ex-Leitungs-Einführung 5 mit dem üblichen, auch durch die gesetzlichen Bestimmungen vorgeschriebenen Aufbau.

Für die erfindungsgemäße Anschlußart "Zuleitung über einen Anschluß-Kasten" wird auf die Fläche 3 ein Anschluß-Kasten 6 (siehe Figur 1) aufgesetzt, der durch eine Ex-Leitungs-Durchführung 7 und die Gewindebohrung 4 mit dem Gehäuse 1 verschraubt wird. Als Abdichtung wird zwischen dem Gehäuse 1 und dem Anschluß-Kasten 6 eine Dichtung 8 mit entsprechender Form angeordnet. Bei rechteckigem Anschluß-Kasten wird diese Dichtung 8 durch einen Dichtungsstreifen mit entsprechender Rechteck-Form gebildet. Eine als Verdrehungsschutz für den Anschluß-Kasten dienende Schraube 10 verbindet den Kasten 6 noch zusätzlich mit dem Leuchtengehäuse.

Die Leitungen 9 der Ex-Leitungs-Durchführung 7 sind im Anschluß-Kasten 6 an Klemmen geführt, die hier nicht dargestellt sind.

Bei der Herstellung einer solchen Schauglas-Leuchte wird das Gehäuse 1 gefertigt, nämlich gegossen, und dann wahlweise entweder mit der Ex-Leitungs-Einführung 5 oder mit dem Anschluß-Kasten 6 versehen, der mittels der Ex-Leitungs-Durchführung 7 mit dem Gehäuse 1 verschraubt wird.

Außerdem ist es möglich, auch nachträglich noch die Anschlußart zu wechseln, beispielsweise die Ex-Leitungs-Einführung 5 abzuschrauben und durch einen Anschluß-Kasten 6 zu ersetzen.

Wie man in Figur 1 erkennt, geht die Fläche 3 mittels einer Stufe in die Außenfläche des Leuchtengehäuses 1 über. Die dem Leuchtengehäuse 1 zugewandte Seite des Anschluß-Kastens 6 ist mit einer entsprechenden, abgestuften Fläche versehen, wodurch sich auch die Montage des Anschluß-Kastens 6 vereinfacht, da nun der Anschluß-Kasten 6 formschlüssig an die Außenseite des Leuchtengehäuses 1 angesetzt und dann fixiert werden kann. Die als Verdrehungsschutz dienende Schraube 10 befindet sich bei dieser Ausgestaltung nicht in der Fläche 3, sondern an der verbleibenden Außenseite des Leuchtengehäuse 1.

## Patentansprüche

1. Elektrische Schauglasleuchte zur Montage auf Schauglas-Flanschfassungen an Behältern, Kesseln, Rohrleitungen und dergleichen, zur Verwendung an explosionsgefährdeten Orten,
a) mit einem Leuchtengehäuse (1),
b) mit einer in dem Leuchtengehäuse (1) angeordneten Lichtquelle (14),
c) mit einer Lichtaustrittsseite an dem Leuchtengehäuse (1), und
d) mit einer an der Außenseite des Leuchtengehäuses (1) ausgebildeten Fläche (3) mit einer Gewinde-Durchgangsbohrung (4),
**gekennzeichnet durch** die folgenden Merkmale:
e) zur Befestigung eines Anschlußkastens (6) an dem Leuchtengehäuse (1) dient eine in die Gewinde-Durchgangsbohrung (4) eingeschraubte Leitungs-Durchführung (7); und
f) in Anpassung an den stufenförmigen Übergang zwischen der Fläche (3) und der übrigen Außenseite des Leuchtengehäuses (1) ist die dem Leuchtengehäuse (1) zugewandte Außenfläche des Anschlußkastens (6) mit einer Abstufung versehen, die das formschlüssige Ansetzen des Anschlußkastens (6) an die Außenseite des Leuchtengehäuses (1) gewährleistet.

2. Elektrische Schauglas-Leuchte nach Anspruch 1, dadurch gekennzeichnet, daß die Fläche (3) im wesentlichen plan ist.

3. Elektrische Schauglas-Leuchte nach einem der Ansprüche 1 oder 2, dadurch gekennzeichnet, daß zwischen dem Leuchtengehäuse (1) und dem Anschluß-Kasten (6) eine Dichtung (8) angeordnet ist.

4. Elektrische Schauglas-Leuchte nach einem der Ansprüche 1 bis 3, dadurch gekennzeichnet, daß die Außenwand des Leuchtengehäuses (1) eine weitere Gewindebohrung für die Aufnahme einer weiteren, als Verdrehsicherung für den Anschluß-Kasten (6) dienenden Schraube (10) aufweist.

5. Elektrische Schauglas-Leuchte nach einem der Ansprüche 1 bis 4, dadurch gekennzeichnet, daß zwischen dem Anschluß-Kasten (6) und der Lichtaustrittseite an der Außenwand des Leuchtengehäuses (1) Befestigungselemente (12) für eine Montagehilfe, beispielsweise für die Montage der Schauglas-Leuchte auf einer Schauglas-Flanschfassung, angeordnet sind.

## Claims

1. An electrically operated inspection window light for mounting on inspection window flange fittings on containers, boilers, pipelines and the like, for use in places where there is an explosion hazard,
a) with a lamp housing (1),
b) with a light source (14) disposed in the lamp housing (1),
c) with a light outlet side on the lamp housing (1) and
d) with, constructed on the outside of the lamp housing (1), a surface (3) having a screw-threaded bore (4),
characterised by the following features:
e) for mounting of a connecting box (6) on the lamp housing (1) there is, screwed into the screw-threaded through-bore (4) a bush (7);
f) to adapt to the step-like transition between the surface (3) and the rest of the outside face of the lamp housing (1), the outside face of the junction box (6) which is towards the lamp housing (1) is provided with a stepped arrangement which guarantees the form-locking application of the junction box (6) against the outside of the lamp housing (1).

2. An electrically operated inspection window light according to Claim 1, characterised in that the surface (3) is substantially flat.

3. An electrically operated inspection window light according to one of Claims 1 or 2, characterised in that a gasket (8) is disposed between the lamp housing (1) and the junction box (6).

4. An electrically operated inspection window light according to one of Claims 1 to 3, characterised in that the outer walls of the lamp housing (1) comprise a further screw-threaded bore adapted to receive a further screw (10) which serves the junction box (6) as a safeguard against rotation.

5. An electrically operated inspection window light according to one of Claims 1 to 4, characterised in that between the junction box (6) and the light outlet side there are on the outer wall of the lamp housing (1) fixing elements (12) for an assembly aid, for example for the installation of an inspection window light on an inspection window flange mounting.

## Revendications

1. Lampe électrique pour regard, destinée à être montée sur des montures de regard bridées de récipients, chaudières, tuyauteries et similaires, pour une utilisation dans des locaux en danger d'explosions, avec
a) un boîtier de lampe (1),
b) une source lumineuse (14) disposée dans le boîtier de lampe (1),
c) un côté de sortie de lumière sur le boîtier de lampe (1), et
d) une face (3), configurée sur le côté extérieur du boîtier de lampe (1), qui est dotée d'un perçage fileté traversant (4),
**caractérisée** par les caractéristiques suivantes :
e) un passe-câble (7), vissé dans le perçage fileté traversant (4), sert à la fixation d'un boîtier de raccordement (6) sur le boîtier de lampe (1) ; et
f) en adaptation à la transition en gradin entre la face (3) et le reste du côté extérieur du boîtier de lampe (1), la face extérieure de la boîte de jonction (6), qui est tournée vers le boîtier de lampe (1), est dotée d'un gradin qui garantit l'application en complémentarité de forme de la boîte de jonction (6) contre le côté extérieur du boîtier de lampe (1).

2. Lampe électrique pour regard selon la revendication 1, **caractérisée** en ce que la face (3) est essentiellement plane.

3. Lampe électrique pour regard selon la revendication 1 ou 2, **caractérisée** en ce qu'un joint d'étanchéité (8) est disposé entre le boîtier de lampe (1) et la boîte de jonction (6).

4. Lampe électrique pour regard selon l'une quelconque des revendications 1 à 3, **caractérisée** en ce que la paroi extérieure du boîtier de lampe (1) présente un perçage fileté supplémentaire pour la réception d'une vis supplémentaire (10) servant au blocage en rotation de la boîte de jonction (6).

5. Lampe électrique pour regard selon l'une quelconque des revendications 1 à 4, **caractérisée** en ce que des éléments de fixation (12) sont disposés comme aide au montage entre la boîte de jonction (6) et le côté de sortie de lumière sur la paroi extérieure du boîtier de lampe (1), par exemple pour le montage de la lampe pour regard sur une monture de regard bridée.
